# EUROPÄISCHE PATENTSCHRIFT

(11) **EP 3 967 987 B1**
(45) Veröffentlichungstag und Bekanntmachung des Hinweises auf die Patenterteilung: **14.08.2024**
(21) Anmeldenummer: 21196050.5
(22) Anmeldetag: 10.09.2021
(51) Int. Cl.: G01F 1/60

(54) **VERFAHREN ZUM BETREIBEN EINES MAGNETISCH-INDUKTIVEN DURCHFLUSSMESSGERÄTS UND ENTSPRECHENDES MAGNETISCH-INDUKTIVES DURCHFLUSSMESSGERÄT**
MAGNETIC-INDUCTIVE FLOW METER AND METHOD FOR OPERATING A MAGNETIC-INDUCTIVE FLOW METER
PROCÉDÉ DE FONCTIONNEMENT D'UN DÉBITMÈTRE MAGNÉTIQUE-INDUCTIF ET DÉBITMÈTRE MAGNÉTIQUE-INDUCTIF CORRESPONDANT

(30) Priorität: 15.09.2020 DE 102020123941
(43) Veröffentlichungstag der Anmeldung: 16.03.2022
(73) Patentinhaber: Krohne Messtechnik GmbH, 47058 Duisburg (DE)
(72) Erfinder: Förster, Jan, 45149 Essen (DE); Dabrowski, Markus, 47269 Duisburg (DE); Fritsch, Thomas, 41466 Neuss (DE)
(74) Vertreter: Gesthuysen Patentanwälte

(56) Entgegenhaltungen:
- EP-B1- 2 259 028
- CN-A- 109 974 799
- JP-A- 2013 257 276
- JP-A- H04 104 013
- JP-A- H05 223 605
- US-A1- 2013 238 259

## Beschreibung

Die Erfindung betrifft ein Verfahren zum Betreiben eines magnetisch-induktiven Durchflussmessgeräts mit einem Messrohr zum Führen eines Mediums, mit einer Magnetfelderzeugungsvorrichtung zum Erzeugen eines das Messrohr senkrecht zur Strömungsrichtung des Mediums durchsetzenden Magnetfeldes, mit einem Elektrodenpaar zum Abgreifen einer in dem Medium im Messrohr induzierten elektrischen Spannung als verrauschtes Rohmesssignal, wobei das verrauschte Rohmesssignal mit einem ersten Signalpfad von einer Signalaufnahmevorrichtung hochohmig von dem Elektrodenpaar aufgenommenen wird und als aufgenommenes verrauschtes Rohmesssignal von der Signalaufnahmevorrichtung an eine erste Signalverarbeitungsvorrichtung weitergeleitet wird und von der Signalverarbeitungsvorrichtung zumindest zu einem entrauschten Durchflussmesssignal verarbeitet wird und das entrauschte Durchflussmesssignal über eine Nutzsignalschnittstelle ausgegeben wird. Ferner betrifft die Erfindung auch ein ebensolches magnetisch-induktives Durchflussmessgerät, das geeignet ist, das zuvor beschriebene Verfahren auszuführen.

Die zuvor genannten Durchflussmessgeräte, die auf dem magnetisch-induktiven Messprinzip beruhen, sind seit Jahrzehnten bekannt. Demzufolge sind auch Verfahren zum Betreiben solcher Durchflussmessgeräte, wie sie zuvor beschrieben worden sind, seit langem bekannt. JP H04 104013 A und JP 2013 257276 A sind Dokumente, die Beispiele von magnetisch-induktiven Durchflussmessern aus dem Stand der Technik offenbaren. Das magnetisch-induktive Messprinzip beruht auf dem Umstand der Kraftwirkung auf Ladungsträger, die sich senkrecht zu einem Magnetfeld bewegen bzw. die eine Bewegungskomponente senkrecht zu dem betreffenden Magnetfeld haben. Um eine Durchflussmessmessung auf diesem Prinzip durchführen zu können, muss das in dem Messrohr geführte Medium eine gewisse elektrische Leitfähigkeit haben Je schneller sich das Medium durch das Messrohr und damit auch durch das von der Magnetfelderzeugungsvorrichtung erzeugte Magnetfeld bewegt, desto stärker erfolgt eine Trennung von Ladungsträgern in dem strömendem Medium des entsprechenden Messrohrabschnitts, und umso stärker wird ein durch die Ladungstrennung bewirktes elektrisches Feld, das sich zwischen den Elektroden des Messrohrs ausbildet und als elektrische Spannung zwischen den Elektroden abgenommen werden kann. Die Messspannung zwischen den Elektroden entwickelt sich proportional zur Strömungsgeschwindigkeit, jedenfalls in dem Zeitraum, in dem das Magnetfeld konstant ist und die Leitfähigkeit des Mediums bzw. die Ladungsträgerkonzentration in dem Medium gleichbleibend ist.

Auch wenn die grundlegenden Zusammenhänge des magnetisch-induktiven Messprinzips vollkommen klar sind, gibt es in der messtechnischen Praxis doch einige Hürden, die zu nehmen sind, bis ein Durchflussmessgerät vorliegt, das zuverlässig genaue Durchflussinformationen liefert. Eine dieser Hürden ist, dass die in dem Medium induzierte elektrische Spannung als ein deutlich verrauschtes Rohmesssignal an den Elektroden des Elektrodenpaares anliegt. Das Signal-zu-Rausch-Verhältnis dieses verrauschten Rohmesssignals ist sehr ungünstig, sodass sich eine zuverlässige, stabile Durchflussinformation aus den verrauschten Rohmessdaten nicht direkt entnehmen lässt. Dieses Rauschen ist im Wesentlichen begründet durch elektrochemische Vorgänge an den Elektroden.

Zur Reduzierung des durch elektrochemische Vorgänge verursachten Rauschens ist es aus dem Stand der Technik beispielsweise bekannt, die Richtung des Magnetfeldes beständig zu wechseln, sodass auch die in dem Medium induzierte Spannung ihre Richtung wechselt. Dazu wird regelmäßig die Bestromungsrichtung der Spulen in der Magnetfelderzeugungsvorrichtung geändert. Da die Magnetfeldrichtung aufgrund der vorhandenen Induktivitäten nicht instantan gewechselt werden kann, sondern stets ein Übergangsbereich vorliegt, in dem das Magnetfeld nicht konstant ist, muss dann darauf geachtet werden, dass nur solche Rohmesssignale für die Ermittlung des Durchflusses verwendet werden, die bei einem konstanten Magnetfeld erfasst worden sind. Durch das beschriebene Umschalten des Magnetfeldes lassen sich bestimmte elektrochemische Effekte reduzieren, gleichwohl ist das Rohmesssignal an den Elektroden weiterhin sehr deutlich verrauscht. Um das verrauschte Rohmesssignal zu einem tauglichen, entrauschten Durchflussmesssignal zu entwickeln, wird das aufgenommene verrauschte Rohmesssignal in einer Signalverarbeitungsvorrichtung entrauscht, beispielsweise durch Mittelwertbildung über eine Vielzahl von aufgenommenen verrauschten Rohmesssignalen. Dieses so gewonnene entrauschte Durchflussmesssignal wird dann über eine Nutzsignalschnittstelle ausgegeben, typischerweise über eine 4-20 mA-Schnittstelle (häufig auch mit überlagertem digitalen HART-Protokoll).

Der vorliegenden Erfindung liegt die Erkenntnis zugrunde, dass in den verrauschten Rohmesssignalen nicht nur Informationen hinsichtlich der induzierten elektrischen Spannung enthalten sind, also Durchflussinformationen, sondern vielmehr auch Informationen, die bislang noch gar nicht genutzt werden, aber gleichwohl einen hohen Mehrwert für den Anwender darstellen können. Mit dem eingangs beschriebenen magnetisch-induktiven Durchflussmessgeräten und dem Verfahren zum Betreiben von magnetisch-induktiven Durchflussmessgeräten sind diese Rohmessdaten jedoch für den Anwender für eine technische Nutzung einfach nicht zugänglich.

Aufgabe der vorliegenden Erfindung ist es, die verrauschten Rohmesssignale technisch verfügbar zu machen und über eine Durchflussinformation hinaus auszuwerten.

Die zuvor hergeleitete und dargestellte Aufgabe wird bei dem eingangs dargestellten Verfahren zum Betreiben eines magnetisch-induktiven Durchflussmessgeräts und bei dem dargestellten magnetisch-induktiven Durchflussmessgerät zunächst und im Wesentlichen dadurch gelöst, dass mit einem zweiten Signalpfad das aufgenommene verrauschte Rohmesssignal des ersten Signalpfades aufgenommen und zumindest mittelbar zu der ersten Signalverarbeitungsvorrichtung und/oder einer zweiten Signalverarbeitungsvorrichtung übermittelt wird, wobei die erste Signalverarbeitungsvorrichtung und/oder die zweite Signalverarbeitungsvorrichtung eine Frequenzanalyse des verrauschten Rohmesssignals durchführt.

Durch den zweiten Signalpfad wird das im ersten Signalpfad aufgenommene verrauschte Rohmesssignal schaltungstechnisch extrahiert und so überhaupt die Möglichkeit geschaffen, eine weitere Verarbeitung der verrauschten Rohmesssignale durchführen zu können. Damit eine weitere Verarbeitung geschehen kann, wird das durch den zweiten Signalpfad aufgenommene verrauschte Rohmesssignal zumindest mittelbar zu der ersten Signalverarbeitungsvorrichtung und/oder zu einer zweiten Signalverarbeitungsvorrichtung übermittelt. Unabhängig davon, welche Signalverarbeitungsvorrichtung verwendet wird, wird dort jedenfalls eine Frequenzanalyse des verrauschten Rohmesssignals durchgeführt.

Erfindungsgemäß ist erkannt worden, dass eine Analyse der verrauschten Rohmesssignale, selbst wenn sie zeitlich hoch aufgelöst vorliegen, im Zeitbereich relativ problematisch ist. Wenn die verrauschten Rohmesssignale einer Frequenzanalyse unterzogen werden, lassen sich zumindest periodische von nicht-periodischen Störsignalen gut unterscheiden und überhaupt lassen sich periodische Ereignisse im Medium des magnetisch-induktiven Durchflussmessgeräts gut erkennen. So wurde z. B. herausgefunden, dass Druck und auch Temperatur im Medium des magnetisch-induktiven Durchflussmessgeräts eine Auswirkung haben auf das verrauschte Rohmesssignal und durch eine Frequenzanalyse des verrauschten Rohmesssignals diese Einflüsse identifiziert werden können.

Ob die verrauschten Rohmesssignale von dem zweiten Signalpfad zu der ersten Signalverarbeitungsvorrichtung übermittelt werden oder zu der zweiten Signalverarbeitungsvorrichtung hängt beispielsweise davon ab, ob die erste Signalverarbeitungsvorrichtung überhaupt in der Lage ist, einen weiteren Datenstrom aufzunehmen und zu verarbeiten.

In einer bevorzugten Ausgestaltung des Verfahrens und des magnetisch-induktiven Durchflussmessgeräts ist vorgesehen, dass die Signalaufnahmevorrichtung des ersten Signalpfads das verrauschte Rohmesssignal mit einem Analog/Digital-Wandler digitalisiert und als digitalisiertes aufgenommenes verrauschtes Rohmesssignal weiterleitet und wobei der zweite Signalpfad das digitalisierte aufgenommene verrauschte Rohmesssignal des ersten Signalpfades aufnimmt und zu der ersten Signalverarbeitungsvorrichtung und/oder zu der zweiten Signalverarbeitungsvorrichtung übermittelt.

In modernen magnetisch-induktiven Durchflussmessgeräten ist es üblich, dass in dem ersten Signalpfad das - zunächst natürlich analoge - verrauschte Rohmesssignal digitalisiert wird und in der ersten Signalverarbeitungsvorrichtung digital weiterverarbeitet wird. Die Signalverarbeitungsvorrichtung basiert in der Praxis häufig auf einem Mikrocontroller oder einem digitalen Signalprozessor. In der beschriebenen Variante des Verfahrens und des magnetisch-induktiven Durchflussmessgeräts wird dieser Umstand genutzt, um das digitalisierte aufgenommene verrauschte Rohmesssignal des ersten Signalpfades mit dem zweiten Signalpfad - digital - aufzunehmen und dann an die erste Signalverarbeitungsvorrichtung und/oder die zweite Signalverarbeitungsvorrichtung zu übermitteln. Die Tatsache, dass das aufgenommene verrauschte Rohmesssignal in dem ersten Signalpfad mit einem Analog/DigitalWandler digitalisiert wird, ändert nichts daran, dass auch das digitalisierte Rohmesssignal immer noch ein "verrauschtes Rohmesssignal" ist, denn mit der digitalen Abtastung des analogen verrauschten Rohmesssignals ist keine Rauschunterdrückung verbunden.

Gemäß einer alternativen Variante des Verfahrens und des magnetisch-induktiven Durchflussmessgeräts ist vorgesehen, dass die Signalaufnahmevorrichtung des ersten Signalpfads das verrauschte Rohmesssignal von den Elektroden mit einer Übertragerstufe hochohmig abgreift und das hochohmig abgegriffene verrauschte Rohmesssignal niederohmig weiterleitet. Das ist im Übrigen auch der Fall, wenn das Signal dann im ersten Signalpfad digitalisiert wird. Der zweite Signalpfad nimmt das niederohmig weitergeleitete aufgenommene verrauschte Rohmesssignal des ersten Signalpfades auf und übermittelt es zu der ersten Signalverarbeitungsvorrichtung und/oder der zweiten Signalverarbeitungsvorrichtung. Bevorzugt wird das zu der ersten Signalverarbeitungsvorrichtung und/oder zu der zweiten Signalverarbeitungsvorrichtung übermittelte aufgenommene verrauschte Rohmesssignal im zweiten Signalpfad digitalisiert und das digitalisierte aufgenommene verrauschte Rohmesssignal wird dann zu der ersten Signalverarbeitungsvorrichtung und/oder der zweiten Signalverarbeitungsvorrichtung übermittelt.

Die Elektrodenanordnung in dem Messrohr zusammen mit dem elektrisch zumindest minimal leitfähigen Medium ist sehr hochohmig, sodass das dort anliegende verrauschte Rohmesssignal in Form der Elektrodenspannung messtechnisch auch sehr hochohmig abgegriffen werden muss, damit das verrauschte Rohmesssignal möglichst rückwirkungsfrei aufgenommen wird und das Messsignal nicht allein durch den Messvorgang zusammenbricht. Die hierzu vorgesehene Übertragerstufe kann beispielsweise realisiert sein auf Basis von Impedanzwandlern, durch eine hochohmigen Verstärkerstufe, z. B. auf Basis von Operationsverstärkern usw. Durch die Übertragerstufe wird die Sensorseite des magnetisch-induktiven Durchflussmessgerätes mit dem Elektrodenpaar elektrisch praktisch entkoppelt von der Datenverarbeitung im restlichen Signalpfad. Der Ausgang der Übertragerstufe sollte niederohmig und damit elektrisch belastbar sein, jedenfalls belastbarer als die Messstrecke um die Elektrodenanordnung.

Dieses hochohmig abgegriffene verrauschte Rohmesssignal am Ausgang der Übertragerstufe wird von dem zweiten Signalpfad nun aufgenommen und zu der ersten Signalverarbeitungsvorrichtung und/oder der zweiten Signalverarbeitungsvorrichtung übermittelt, wobei vorzugsweise auf diesem Weg auch eine Digitalisierung des aufgenommenen verrauschten Rohmesssignals durch einen Analog/Digital-Wandler erfolgt. Der Vorteil dieser Vorgehensweise besteht darin, dass im ersten Signalpfad und im zweiten Signalpfad mit ganz unterschiedlichen Abtastraten und Datenströmen gearbeitet werden kann, je nachdem, wie dies gewünscht ist. Denkbar ist beispielsweise, dass die Abtastrate in dem ersten Signalpfad deutlich geringer gewählt wird als in dem zweiten Signalpfad, da die Auswertung der verrauschten Rohmesssignale, die über den zweiten Signalpfad weitergeleitet werden, mit einer deutlich höheren zeitlichen Auflösung erfolgen muss, damit eine gewünschte Bandbreite bei der Frequenzanalyse des aufgenommenen verrauschten Rohmesssignals erzielt werden kann.

Gemäß einer bevorzugten Ausgestaltung des Verfahrens und des magnetisch-induktiven Durchflussmessgerätes ist vorgesehen, dass das aufgenommene verrauschte Rohmesssignal über eine von der Nutzsignalschnittstelle verschiedenen weiteren Signalschnittstelle des magnetisch-induktiven Durchflussmessgeräts zu der zweiten Signalverarbeitungsvorrichtung extern des magnetisch-induktiven Durchflussmessgeräts übermittelt wird. Die über den zweiten Signalpfad aufgenommenen verrauschten Rohmesssignale werden hier also der zweiten Signalverarbeitungsvorrichtung über eine weitere Signalschnittstelle übermittelt, wobei die zweite Signalverarbeitungsvorrichtung sich dann zwingend außerhalb des magnetisch-induktiven Durchflussmessgeräts befindet. Die weitere Signalschnittstelle wird dann bevorzugt in einer anderen Technologie ausgebildet sein, als die Nutzsignalschnittstelle, über die das entrauschte Durchflussmesssignal ausgegeben wird. Beispielsweise könnte es sich um eine Ethernet-Schnittstelle handeln.

Bei einer weiteren bevorzugten Ausgestaltung des Verfahrens und des magnetisch-induktiven Durchflussmessgeräts ist vorgesehen, dass das aufgenommene verrauschte Rohmesssignal zu der ersten Signalverarbeitungsvorrichtung und/oder der zweiten Signalverarbeitungsvorrichtung innerhalb des magnetisch-induktiven Durchflussmessgeräts übertragen wird. Hier befindet sich die zweite Signalverarbeitungsvorrichtung also in dem magnetisch-induktiven Durchflussmessgerät. Dies widerspricht nicht der Lösung, die aufgenommenen Rohmesssignale über die weitere Signalschnittstelle nach außerhalb des magnetisch-induktiven Durchflussmessgeräts zu übertragen. Beide Varianten können auch gleichzeitig realisiert werden.

Erfindungsgemäß das Verfahren und das magnetisch-induktiven Durchflussmessgerät zeichnen sich dadurch aus, dass das von der Magnetfelderzeugungsvorrichtung erzeugte Magnetfeld insbesondere periodisch umgekehrt wird und von der ersten Signalverarbeitungsvorrichtung und/oder der zweiten Signalverarbeitungsvorrichtung nur solche übermittelten verrauschten Rohmesssignale für die Frequenzanalyse herangezogen werden, die aus einem Zeitfenster stammen, in dem das Magnetfeld konstant ist.

Erfindungsgemäß ist das Verfahren und das magnetisch-induktiven Durchflussmessgerät dadurch gekennzeichnet, dass mehrere Frequenzanalysen mit übermittelten verrauschten Rohmesssignalen aus mehreren Zeitfenstern konstanten Magnetfeldes von der ersten Signalverarbeitungsvorrichtung und/oder von der zweiten Signalverarbeitungsvorrichtung berechnet werden und die frequenzabhängigen Ergebniswerte der Frequenzanalysen gemittelt werden zu einer gemittelten Frequenzanalyse, insbesondere wobei Frequenzanalysen aus mindestens zehn Zeitfenstern gemittelt werden, vorzugsweise Frequenzanalysen aus mindestens 100 Zeitfenstern gemittelt werden.

Gemäß einer weiteren Ausgestaltung des Verfahrens und des magnetisch-induktiven Durchflussmessgeräts ist vorgesehen, dass als Frequenzanalyse eine Fast-Fourier-Transformation auf Grundlage der aufgenommenen verrauschten Rohmesssignale durchgeführt wird, insbesondere wobei die Anzahl der verrauschten Rohmesssignale durch Zero-Padding auf die nächsthöhere Zweierpotenz erhöht wird, insbesondere wenn die Anzahl der für die Frequenzanalyse zur Verfügung stehenden verrauschten Rohmesswerte eines Zeitfensters keiner Zweierpotenz entspricht.

Jedes zuvor beschriebene Merkmal, das möglicherweise nur im Zusammenhang mit dem Verfahren zum Betreiben eines magnetisch-induktiven Durchflussmessgeräts beschrieben worden ist, gilt selbstverständlich gleichermaßen gegenständlich auch für ein magnetisch-induktives Durchflussmessgerät, das zur **Ausführung** des beschriebenen Verfahrens ausgestaltet ist. Umgekehrt sind Merkmale, die zuvor möglicherweise nur im Kontext eines magnetisch-induktiven Durchflussmessgeräts beschrieben worden sind, gleicherma-ßen auch als Merkmale des hier beschriebenen Verfahrens zum Betreiben des magnetisch-induktiven Durchflussmessgeräts zu verstehen.

Im Einzelnen gibt es eine Vielzahl von Möglichkeiten, das erfindungsgemä-ße Verfahren zum Betreiben des magnetisch-induktiven Durchflussmessgeräts und das entsprechende erfindungsgemäße magnetisch-induktive Durchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: eine erste grundlegende Variante eines Verfahrens zum Betreiben eines magnetisch-induktiven Durchflussmessgeräts und ein entsprechendes magnetisch-induktives Durchflussmessgerät,
- Fig. 2: eine zweite Variante des Verfahrens zum Betreiben eines magnetisch-induktiven Durchflussmessgeräts und ein entsprechendes magnetisch-induktives Durchflussmessgeräts mit einem Digital/Analog-Wandler im ersten Signalpfad,
- Fig. 3: eine weitere Variante des Verfahrens zum Betreiben eines magnetisch-induktiven Durchflussmessgeräts und ein entsprechendes magnetisch-induktives Durchflussmessgeräts mit einer Übertragerstufe zum hochohmigen Abgriff des verrauschten Rohmesssignals,
- Fig. 4: eine weitere Variante des Verfahrens zum Betreiben eines magnetisch-induktiven Durchflussmessgeräts und ein entsprechendes magnetisch-induktives Durchflussmessgeräts mit einer weiteren Signalschnittstelle,
- Fig. 5: schematisch ein zeitlicher Verlauf der elektrischen Spannung zwischen den Elektroden in Abhängigkeit vom elektrischen Strom durch die Spulen der Magnetfelderzeugungsvorrichtung und daraus resultierende Zeitfenster für die Messung und
- Fig. 6: Frequenzanalysen der aufgenommenen verrauschten Rohmesssignale sowie Mittelung mehrerer Frequenzanalysen.

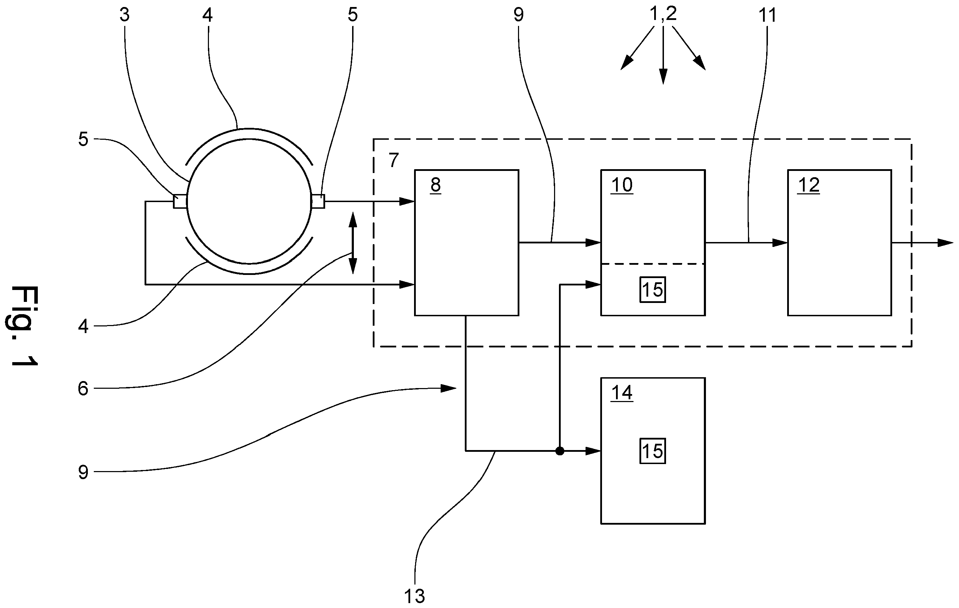

In den Fig. 1 bis 4 sind jeweils gemeinsam dargestellt ein Verfahren 1 zum Betreiben eines magnetisch-induktiven Durchflussmessgeräts 2 und gleichzeitig auch ein entsprechendes magnetisch-induktives Durchflussmessgerät 2.

Das magnetisch-induktive Durchflussmessgerät 2 weist ein Messrohr 3 zum Führen eines Mediums auf, eine Magnetfelderzeugungsvorrichtung 4 zum Erzeugen eines das Messrohr 3 senkrecht zur Strömungsrichtung des Mediums durchsetzenden Magnetfeldes und ein Elektrodenpaar 5 zum Abgreifen einer in dem Medium im Messrohr induzierten elektrischen Spannung als verrauschtes Rohmesssignal 6. Diese Anordnung wird häufig auch als "Sensor" des magnetisch-induktiven Durchflussmessgeräts 2 bezeichnet.

Das verrauschte Rohmesssignal 6 wird mit einem ersten Signalpfad 7 (siehe Fig. 1) von einer Signalaufnahmevorrichtung 8 hochohmig von dem Elektrodenpaar 5 aufgenommen und als aufgenommenes verrauschtes Rohmesssignal 9 von der Signalaufnahmevorrichtung 8 an eine erste Signalverarbeitungsvorrichtung 10 weitergeleitet. Von der Signalverarbeitungsvorrichtung 10 wird das aufgenommene verrauschte Rohmesssignal 9 zumindest zu einem entrauschten Durchflussmesssignal 11 verarbeitet und das entrauschte Durchflussmesssignal 11 wird dann über eine Nutzsignalschnittstelle 12 ausgegeben. Die Nutzsignalschnittstelle 12 ist in den dargestellten Ausführungsbeispielen eine Zweileiter-Stromschnittstelle mit überlagertem HART-Protokoll, wie sie in der Prozessindustrie vielfach verwendet wird.

Der erste Signalpfad 7 ist in Fig. 1 von einem gestrichelten Kasten umgeben. Diese Bestandteile des magnetisch-induktiven Durchflussmessgeräts 2 bilden üblicherweise den sogenannten Transmitter. In der Signalverarbeitungsvorrichtung 10 werden zur Entrauschung des aufgenommenen verrauschten Rohmesssignals 9 eine Vielzahl von Einzelwerten gemittelt und zu einem brauchbaren entrauschten Durchflussmesssignal 11 verarbeitet.

Die in den Fig. 1 bis 4 dargestellten Verfahren zum Betreiben eines magnetisch-induktiven Durchflussmessgeräts 2 und die damit korrespondierende n magnetisch-induktiven Durchflussmessgeräte 2 zeigen verschiedene Möglichkeiten, Informationen, die sich überraschenderweise in dem verrauschten Rohmesssignal 6 befinden und die eigentlich nichts mit der Primärmessgröße des Durchflusses zu tun haben, aus dem verrauschten Rohmesssignal 6 zu extrahieren und technisch nutzbar zu machen. Den dargestellten Ausführungsbeispielen ist gemeinsam, dass mit einem zweiten Signalpfad 13 das aufgenommene verrauschte Rohmesssignal 9, 9' des ersten Signalpfades 7 aufgenommen und zumindest mittelbar zu der ersten Signalverarbeitungsvorrichtung 10 und/oder zu einer zweiten Signalverarbeitungsvorrichtung 14 übermittelt wird, wobei die erste Signalverarbeitungsvorrichtung 10 und/oder die zweite Signalverarbeitungsvorrichtung 14 eine Frequenzanalyse 15 des verrauschten Rohmesssignals 9, 9' durchführt. Durch Diese Maßnahme ist es möglich, periodische Ereignisse, die sich auf das verrauschte Rohmesssignal auswirken, zu detektieren. Der Maßnahme liegt die überraschende Erkenntnis zugrunde, dass sich in den verrauschten Rohmessdaten 6 eine Vielzahl von Informationen niederschlägt, die mit der primär interessierenden Durchflussmessgröße in keinem offenkundigen Zusammenhang stehen. So können beispielsweise bei der Frequenzanalyse 15 sehr gut periodische Druckschwankungen in dem Medium detektiert werden.

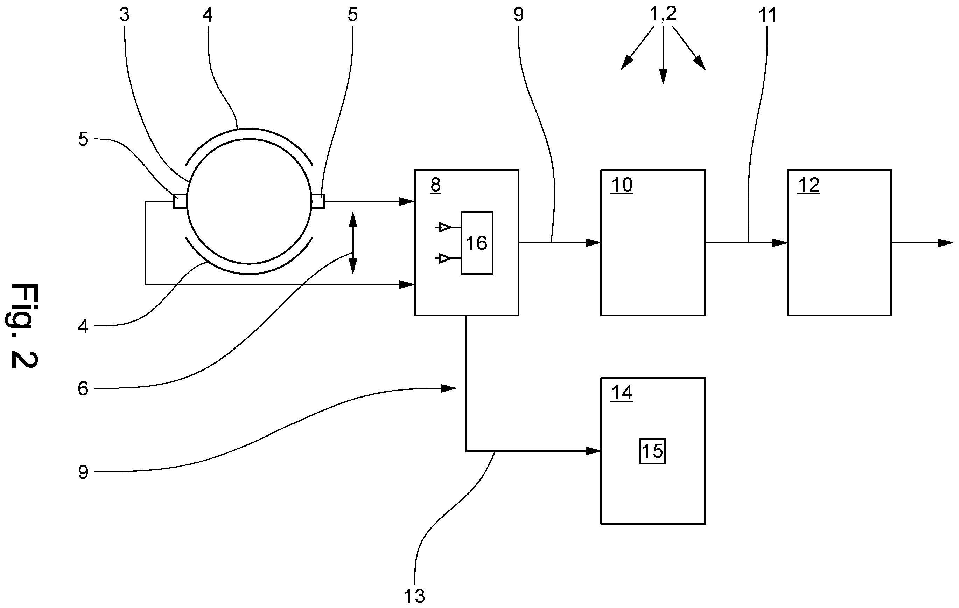

In Fig. 2 ist dargestellt, dass die Signalaufnahmevorrichtung 8 des ersten Signalpfades 7 das verrauschte Rohmesssignal 6 mit einem Analog/DigitalWandler 16 digitalisiert und als digitalisiertes aufgenommenes verrauschtes Rohmesssignal 9 weiterleitet. In diesem Fall nimmt der zweite Signalpfad 13 das nunmehr digitalisierte aufgenommene verrauschte Rohmesssignal 9 des ersten Signalpfades 7 auf und übermittelt es zu der zweiten Signalverarbeitungsvorrichtung 14. Dort erfolgt die Frequenzanalyse 15 des verrauschten Rohmesssignals 9. Diese Variante ist besonders vorteilhaft, weil digitale Daten inhaltlich verlustfrei abgezweigt und weitergeleitet werden können, solange definierte Signalpegel eingehalten werden.

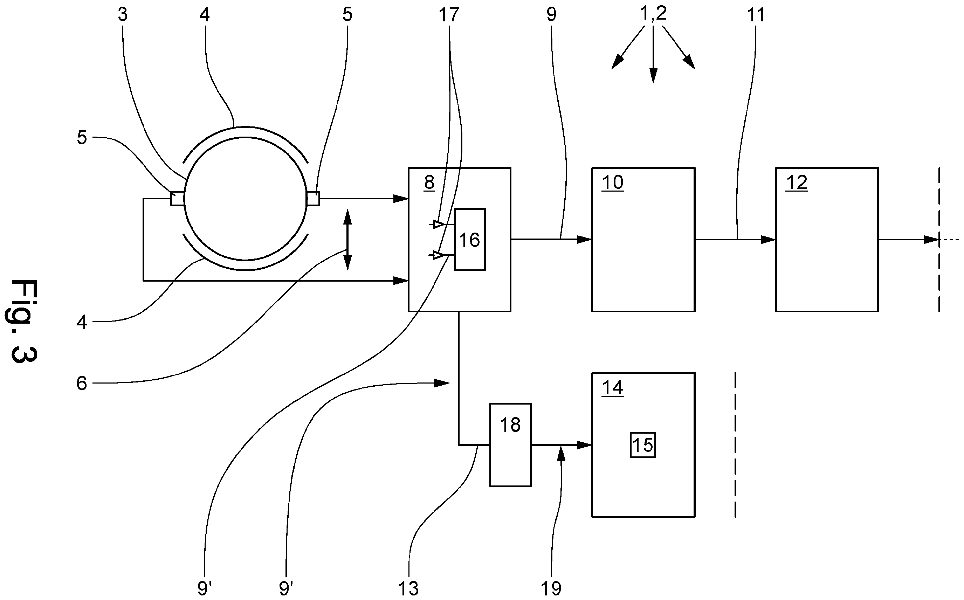

In Fig. 3 ist zu sehen, dass die Signalaufnahmevorrichtung 8 des ersten Signalpfads 7 das verrauschte Rohmesssignal 6 von den Elektroden 5 mit einer Übertragerstufe 17 hochohmig abgreift (das war auch schon in Fig. 2 realisisert) und das hochohmig abgegriffene verrauschte Rohmesssignal 9' niederohmig weiterleitet. Üblicherweise wird diese Übertragerstufe 17 eine Verstärkerstufe sein, die eine rückwirkungsfreie Aufnahme des empfindlichen verrauschten Rohmesssignals 6 ermöglicht (Buffer, Impedanzwandler, Verstärkerstufe mit hochohmigem Eingang und niederohmigem Ausgang). Der zweite Signalpfad 13 nimmt das niederohmig weitergeleitete aufgenommene verrauschte Rohmesssignal 9' des ersten Signalpfades auf und übermittelt es in diesem Fall zu der zweiten Signalverarbeitungsvorrichtung 14, wo die Frequenzanalyse 15 durchgeführt wird. In dem dargestellten Ausführungsbeispiel wird das zu der zweiten Signalverarbeitungsvorrichtung 14 übermittelte aufgenommene verrauschte Rohmesssignal 9', bevor es die zweite Signalverarbeitungsvorrichtung 14 erreicht, mit einem Analog/Digital-Wandler 18 digitalisiert. Die hier dargestellte Vorgehensweise hat den Vorteil, dass im ersten Signalpfad 7 und im zweiten Signalpfad 13 mit unterschiedlichen Abtastfrequenzen gearbeitet werden kann.

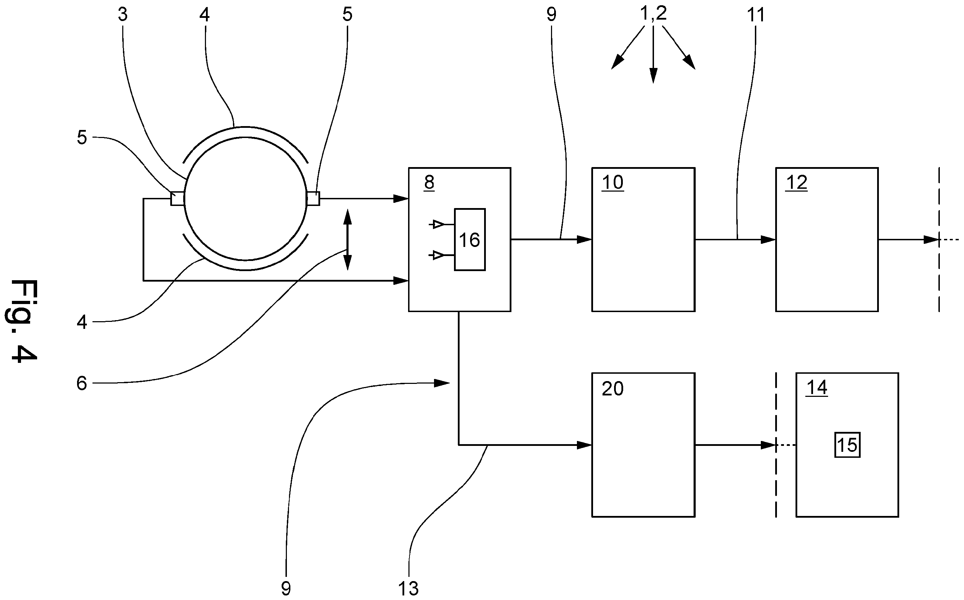

In der Fig. 4 ist eine interessante Variante des Verfahrens 1 und des magnetisch-induktiven Durchflussmessgeräts 2 dargestellt. Die Variante zeichnet sich dadurch aus, dass das von dem zweiten Signalpfad 13 aufgenommene verrauschte Rohmesssignal 9 über eine von der Nutzsignalschnittstelle 12 verschiedenen weiteren Signalschnittstelle 20 des magnetisch-induktiven Durchflussmessgeräts 2 zu der zweiten Signalverarbeitungsvorrichtung 14 übermittelt wird. Demzufolge befindet sich die zweite Signalverarbeitungsvorrichtung 14 außerhalb des magnetisch-induktiven Durchflussmessgeräts 2, die Grenze ist hier durch die zwei vertikalen gestrichelten Linien angedeutet, wie auch in Fig. 3. Die weitere Signalschnittstelle 20 ist in dem dargestellten Ausführungsbeispiel als Ethernet-Schnittstelle ausgestaltet. Die zweite Signalverarbeitungsvorrichtung 14 kann also ganz entfernt von dem dargestellten magnetisch-induktiven Durchflussmessgerät 2 realisiert sein. Beispielsweise in einer Leitstelle, in einem Laptop, in einem Handgerät oder auch bei dem Hersteller des magnetisch-induktiven Durchflussmessgeräts 2 oder des Errichters der prozesstechnischen Anlage, in der das betreffende magnetisch-induktive Durchflussmessgerät verbaut ist.

Im Gegensatz zu dem Ausführungsbeispiel gemäß Fig. 4 wird das aufgenommene verrauschte Rohmesssignal 9' im Ausführungsbeispiel gemäß Fig. 3 zu der zweiten Signalverarbeitungsvorrichtung 14 übertragen, wobei die zweite Signalverarbeitungsvorrichtung 14 innerhalb des magnetisch-induktiven Durchflussmessgeräts 2 realisiert ist; auch hier sind die vertikalen gestrichelten Linien zu beachten, die die physikalische Grenze des schematisch dargestellten magnetisch-induktiven Durchflussmessgeräts andeuten.

Die magnetisch-induktiven Durchflussmessgeräte 2 gemäß den Fig. 2 bis 4 zeichnen sich dadurch aus, dass der zweite Signalpfad 13 und die schaltungstechnischen Elemente im zweiten Signalpfad 13 schaltungstechnisch unabhängig von dem ersten Signalpfad 7 und den schaltungstechnischen Elementen des ersten Signalpfades 7 realisiert sind. Davon ausgenommen ist selbstverständlich die immer erforderliche signalmäßige Verbindung, mit der das aufgenommene verrauschte Rohmesssignal 9, 9' des ersten Signalpfades 7 zu dem zweiten Signalpfad 13 übertragen wird. Eine Realisierung der magnetisch-induktiven Durchflussmessgeräte 2 unter dieser Maßgabe hat den Vorteil, dass der zweite Signalpfad 13 auch nachträglich in ein schon vorhandenen magnetisch-induktiven Durchflussmessgerät 2 mit einem ersten Signalpfad 7 eingebaut werden kann. Unabhängig von der Möglichkeit des nachträglichen Einbaus hat diese Lösung auch den Vorteil, dass die Realisierung des zweiten Signalpfades 13 nicht in Konflikt gerät mit einer etwaigen technischen Zertifizierung der Schaltung oder eines Schaltungsteils im ersten Signalpfad 7 (z. B. SIL-Zertifizierung).

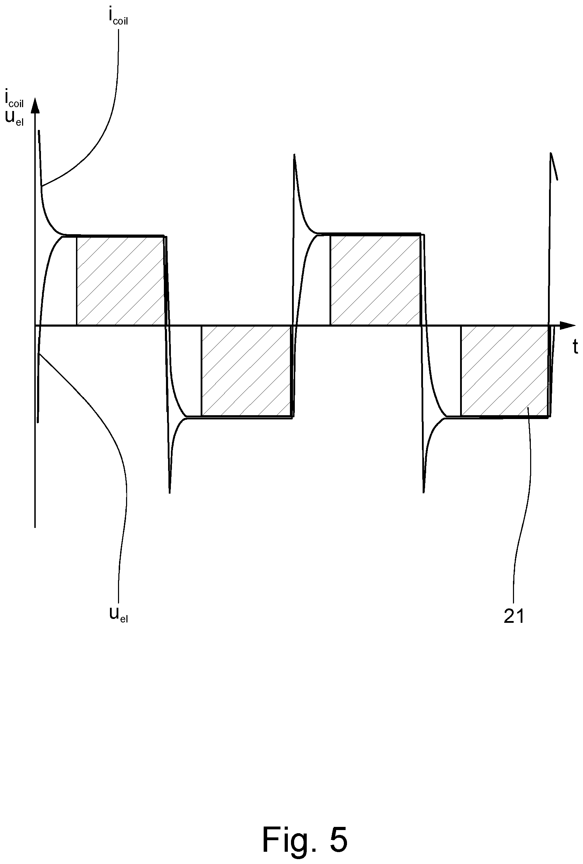

In Fig. 5 ist der Verlauf des Spulenstroms i_{coil}, mit dem in der Magnetfelderzeugungsvorrichtung 4 die Feldspulen bestromt werden, und der Verlauf der (hier glatt dargestellten) Rohmesssignale 6, 9 in Form der Elektrodenspannung uₑₗ dargestellt. Die Stromrichtung wird also periodisch umgeschaltet, womit sich auch periodisch die Magnetfeldrichtung und das Vorzeichen der induzierten Messspannung verändern. Wie in Fig. 5 zu sehen ist, ist die Spannung uₑ₁ an den Elektroden 5 nur in einem Bereich des gesamten Kurvenverlaufs stationär. Demzufolge wird bei den Verfahren 1 und in den magnetisch-induktiven Durchflussmessgeräten 1 darauf geachtet, dass nur die in den stationären Zeitfenstern 21 liegenden übermittelten verrauschten Rohmesssignale 9, 9' für die Frequenzanalyse 15 herangezogen werden.

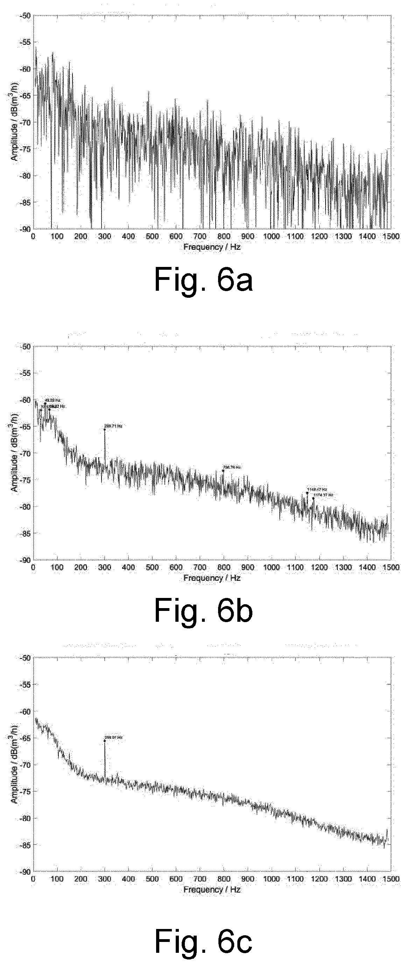

Fig. 6 zeigt den vorteilhaften Effekt der Mittelung mehrerer Frequenzanalysen 15. Dazu werden mehrere Frequenzanalysen 15 mit übermittelten verrauschten Rohmesssignalen 9, 9' aus mehreren Zeitfenstern 21 konstanten Magnetfeldes von der ersten Signalverarbeitungsvorrichtung 10 und/oder von der zweiten Signalverarbeitungsvorrichtung 14 berechnet. Es resultiert typischerweise eine Amplitudenspektrum, wo also über die Signalfrequenz die Signalamplituden aufgetragen werden als Veranschaulichung der frequenzabhängigen Energieverteilung des analysierten Rohmesssignals; dies sind die frequenzabhängigen Ergebniswerte der Frequenzanalysen 15. Über die frequenzabhängigen Ergebniswerte der Frequenzanalysen 15 wird gemittelt, sodass eine gemittelte Frequenzanalyse resultiert. In Fig 6a ist das Ergebnis der Frequenzauswertung 15 der Rohmesssignale eines einzigen Zeitfensters dargestellt, in Fig. 6b eine gemittelte Frequenzanalyse von Rohmesssignalen aus zehn Zeitfenstern 21, und in Fig. 6c eine gemittelte Frequenzanalyse 15 von Rohmesssignalen aus 120 Zeitfenstern 21. Es ist deutlich zu erkennen, dass die gemittelten Ergebnisse eine erheblich kleinere Schwankungsbreite aufweisen und daher zuverlässiger sind.

Die Verfahren 1 und die magnetisch-induktiven Durchflussmessgeräte 2 in den dargestellten Ausführungsbeispielen sind so ausgestaltet, dass als Frequenzanalyse 15 jeweils Fast-Fourier-Transformationen auf Grundlage der aufgenommenen verrauschten Rohmesssignale 9, 9' durchgeführt werden, wobei die Anzahl der verrauschten Rohmesssignale 9, 9' durch Zero-Padding auf die nächsthöhere Zweierpotenz erhöht wird, speziell dann, wenn die Anzahl der für die Frequenzanalyse 15 zur Verfügung stehenden verrauschten Rohmesswerte eines Zeitfensters 21 keiner Zweierpotenz entspricht.

### Bezugszeichen

- 1: Verfahren zum Betreiben eines magnetisch-induktiven Durchflussmessgeräts
- 2: magnetisch-induktives Durchflussmessgerät
- 3: Messrohr
- 4: Magnetfelderzeugungsvorrichtung
- 5: Elektrodenpaar
- 6: verrauschtes Rohmesssignal
- 7: erster Signalpfad
- 8: Signalaufnahmevorrichtung
- 9, 9': aufgenommenes verrauschtes Rohmesssignal
- 10: Signalverarbeitungsvorrichtung
- 11: entrauschten Durchflussmesssignal
- 12: Nutzsignalschnittstelle
- 13: zweiter Signalpfad
- 14: zweiten Signalverarbeitungsvorrichtung
- 15: Frequenzanalyse
- 16: Analog/Digital-Wandler
- 17: Übertragerstufe
- 18: Analog/Digital-Wandler
- 19: digitalisiertes aufgenommenes verrauschtes Rohmesssignal
- 20: weitere Signalschnittstelle
- 21: Zeitfenster

## Patentansprüche

1. Verfahren (1) zum Betreiben eines magnetisch-induktiven Durchflussmessgeräts (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes, mit einem Elektrodenpaar (5) zum Abgreifen einer in dem Medium im Messrohr (3) induzierten elektrischen Spannung als verrauschtes Rohmesssignal (6), wobei das verrauschte Rohmesssignal (6) mit einem ersten Signalpfad (7) von einer Signalaufnahmevorrichtung (8) hochohmig von dem Elektrodenpaar (5) aufgenommenen wird und als aufgenommenes verrauschtes Rohmesssignal (9) von der Signalaufnahmevorrichtung (8) an eine erste Signalverarbeitungsvorrichtung (10) weitergeleitet wird und von der Signalverarbeitungsvorrichtung (10) zumindest zu einem entrauschten Durchflussmesssignal (11) verarbeitet wird und das entrauschte Durchflussmesssignal (11) über eine Nutzsignalschnittstelle (12) ausgegeben wird, wobei mit einem zweiten Signalpfad (13) das aufgenommene verrauschte Rohmesssignal (9, 9') des ersten Signalpfades (7) aufgenommen und zumindest mittelbar zu der ersten Signalverarbeitungsvorrichtung (10) und/oder einer zweiten Signalverarbeitungsvorrichtung (14) übermittelt wird, **dadurch gekennzeichnet, dass** die erste Signalverarbeitungsvorrichtung (10) und/oder die zweite Signalverarbeitungsvorrichtung (14) eine Frequenzanalyse (15) des aufgenommenen verrauschten Rohmesssignals (9, 9') durchführt,
dass das von der Magnetfelderzeugungsvorrichtung (4) erzeugte Magnetfeld periodisch umgekehrt wird und von der ersten Signalverarbeitungsvorrichtung (10) und/oder der zweiten Signalverarbeitungsvorrichtung (14) nur solche übermittelten verrauschten Rohmesssignale (9, 9') für die Frequenzanalyse herangezogen werden, die aus einem Zeitfenster (21) stammen, in dem das Magnetfeld konstant ist, und dass mehrere Frequenzanalysen (15) mit übermittelten verrauschten Rohmesssignalen (9, 9') aus mehreren Zeitfenstern (21) konstanten Magnetfeldes von der ersten Signalverarbeitungsvorrichtung (10) und/oder von der zweiten Signalverarbeitungsvorrichtung (14) berechnet werden und die frequenzabhängigen Ergebniswerte der Frequenzanalysen (15) gemittelt werden zu einer gemittelten Frequenzanalyse.

2. Verfahren (1) nach Anspruch 1, **dadurch gekennzeichnet, dass** die Signalaufnahmevorrichtung (8) des ersten Signalpfads (7) das verrauschte Rohmesssignal (6) mit einem Analog/Digital-Wandler (16) digitalisiert und als digitalisiertes aufgenommenes verrauschtes Rohmesssignal (9) weiterleitet und wobei der zweite Signalpfad (13) das digitalisierte aufgenommene verrauschte Rohmesssignal (9) des ersten Signalpfades (7) aufnimmt und zu der ersten Signalverarbeitungsvorrichtung (10) und/oder der zweiten Signalverarbeitungsvorrichtung (14) übermittelt.

3. Verfahren (1) nach Anspruch 1, **dadurch gekennzeichnet, dass** die Signalaufnahmevorrichtung (8) des ersten Signalpfads (7) das verrauschte Rohmesssignal (6) von den Elektroden (5) mit einer Übertragerstufe (17) hochohmig abgreift und das hochohmig abgegriffene verrauschte Rohmesssignal (9') niederohmig weiterleitet und wobei der zweite Signalpfad (13) das niederohmig weitergeleitete aufgenommene verrauschte Rohmesssignal (9') des ersten Signalpfades aufnimmt und zu der ersten Signalverarbeitungsvorrichtung (10) und/oder der zweiten Signalverarbeitungsvorrichtung (14) übermittelt, insbesondere wobei das zu der ersten Signalverarbeitungsvorrichtung (10) und/oder der zweiten Signalverarbeitungsvorrichtung (14) übermittelte aufgenommene verrauschte Rohmesssignal (9') im zweiten Signalpfad (13) mit dem Analog/Digital-Wandler (18) digitalisiert wird und das digitalisierte aufgenommene verrauschte Rohmesssignal (19) zu der ersten Signalverarbeitungsvorrichtung (10) und/oder der zweiten Signalverarbeitungsvorrichtung (14) übermittelt wird.

4. Verfahren (1) nach einem der Ansprüche 1 bis 3, **dadurch gekennzeichnet, dass** das von dem zweiten Messsignalpfad (13) aufgenommene verrauschte Rohmesssignal (9, 9') zumindest mittelbar über eine von der Nutzsignalschnittstelle (12) verschiedene weitere Signalschnittstelle (20) des magnetisch-induktiven Durchflussmessgeräts (2) zu der zweiten Signalverarbeitungsvorrichtung (14) extern des magnetisch-induktiven Durchflussmessgeräts (2) übermittelt wird.

5. Verfahren (1) nach einem der Ansprüche 1 bis 4, **dadurch gekennzeichnet, dass** das von dem zweiten Messsignalpfad (13) aufgenommene verrauschte Rohmesssignal (9, 9') zu der ersten Signalverarbeitungsvorrichtung (10) und/oder der zweiten Signalverarbeitungsvorrichtung (14) innerhalb des magnetisch-induktiven Durchflussmessgeräts (2) übertragen wird.

6. Verfahren (1) nach Anspruch 1 bis 5 , **dadurch gekennzeichnet, dass** die Frequenzanalysen (15) aus mindestens 10 Zeitfenstern (21) gemittelt werden, vorzugsweise Frequenzanalysen (15) aus mindestens 100 Zeitfenstern (21) gemittelt werden.

7. Verfahren nach einem der Ansprüche 1 bis 6, **dadurch gekennzeichnet, dass** als Frequenzanalyse (15) eine Fast-Fourier-Transformation auf Grundlage der aufgenommenen verrauschten Rohmesssignale (9, 9') durchgeführt wird, insbesondere wobei die Anzahl der verrauschten Rohmesssignale durch Zero-Padding auf die nächsthöhere Zweierpotenz erhöht wird, insbesondere wenn die Anzahl der für die Frequenzanalyse (15) zur Verfügung stehenden verrauschten Rohmesswerte eines Zeitfensters (21) keiner Zweierpotenz entspricht.

8. Magnetisch-induktives Durchflussmessgerät (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes, mit einem Elektrodenpaar (5) zum Abgreifen einer in dem Medium im Messrohr (3) induzierten elektrischen Spannung als verrauschtes Rohmesssignal (6), wobei das verrauschte Rohmesssignal (6) mit einem ersten Signalpfad (7) von einer Signalaufnahmevorrichtung (8) hochohmig von dem Elektrodenpaar (5) aufgenommenen wird und als aufgenommenes verrauschtes Rohmesssignal (9) von der Signalaufnahmevorrichtung (8) an eine erste Signalverarbeitungsvorrichtung (10) weitergeleitet wird und von der ersten Signalverarbeitungsvorrichtung (10) zumindest zu einem entrauschten Durchflussmesssignal (11) verarbeitet wird und das entrauschte Durchflussmesssignal (11) über eine Nutzsignalschnittstelle (12) ausgegeben wird,
wobei ein zweiter Signalpfad (13) realisiert ist und mit dem zweiten Signalpfad (3) das aufgenommene verrauschte Rohmesssignal (9, 9') des ersten Signalpfades (7) aufgenommen und zumindest mittelbar zu der ersten Signalverarbeitungsvorrichtung (10) und/oder einer zweiten Signalverarbeitungsvorrichtung (14) übermittelt wird, **dadurch gekennzeichnet, dass** die erste Signalverarbeitungsvorrichtung (10) und/oder die zweite Signalverarbeitungsvorrichtung (14) eine Frequenzanalyse (15) des aufgenommenen verrauschten Rohmesssignals (9, 9') durchführt, wobei der zweite Signalpfad (13) und die schaltungstechnischen Elemente im zweiten Signalpfad (13) schaltungstechnisch unabhängig von dem ersten Signalpfad (7) und den schaltungstechnischen Elementen des ersten Signalpfades (7) realisiert sind.

9. Magnetisch-induktives Durchflussmessgerät (2) nach Anspruch 8, **dadurch gekennzeichnet, dass** die Signalaufnahmevorrichtung (8) des ersten Signalpfads (7) das verrauschte Rohmesssignal (6) mit einem Analog/DigitalWandler (16) digitalisiert und als digitalisiertes aufgenommenes verrauschtes Rohmesssignal (9) weiterleitet und wobei der zweite Signalpfad (13) das digitalisierte aufgenommene verrauschte Rohmesssignal (9) des ersten Signalpfades (7) aufnimmt und zu der ersten Signalverarbeitungsvorrichtung (10) und/oder der zweiten Signalverarbeitungsvorrichtung (14) übermittelt.

10. Magnetisch-induktives Durchflussmessgerät (2) nach Anspruch 8, **dadurch gekennzeichnet, dass** die Signalaufnahmevorrichtung (8) des ersten Signalpfads (7) das verrauschte Rohmesssignal (6) von den Elektroden (5) mit einer Übertragerstufe (17) hochohmig abgreift und das hochohmig abgegriffene verrauschte Rohmesssignal (9') niederohmig weiterleitet und wobei der zweite Signalpfad (13) das niederohmig weitergeleitete aufgenommene verrauschte Rohmesssignal (9') des ersten Signalpfades (7) aufnimmt und zu der ersten Signalverarbeitungsvorrichtung (10) und/oder der zweiten Signalverarbeitungsvorrichtung (14) übermittelt, insbesondere wobei das zu der ersten Signalverarbeitungsvorrichtung (10) und/oder der zweiten Signalverarbeitungsvorrichtung (14) übermittelte aufgenommene verrauschte Rohmesssignal (9') im zweiten Signalpfad (13) mit einem Analog/Digital-Wandler (18) digitalisiert wird und das digitalisierte aufgenommene verrauschte Rohmesssignal (19) zu der ersten Signalverarbeitungsvorrichtung (10) und/oder der zweiten Signalverarbeitungsvorrichtung (14) übermittelt wird.

11. Magnetisch-induktives Durchflussmessgerät (2) nach einem der Ansprüche 8 bis 10, **dadurch gekennzeichnet, dass** das aufgenommene verrauschte Rohmesssignal (9, 9')) über eine von der Nutzsignalschnittstelle (12) verschiedene weitere Signalschnittstelle (20) des magnetisch-induktiven Durchflussmessgeräts (2) zu der zweiten Signalverarbeitungsvorrichtung (14) extern des magnetisch-induktiven Durchflussmessgeräts (2) übermittelt wird.

12. Magnetisch-induktives Durchflussmessgerät (2) nach einem der Ansprüche 8 bis 11, **dadurch gekennzeichnet, dass** das aufgenommene verrauschte Rohmesssignal (9, 9') zu der ersten Signalverarbeitungsvorrichtung (10) und/oder der zweiten Signalverarbeitungsvorrichtung (14) innerhalb des magnetisch-induktiven Durchflussmessgeräts (2) übertragen wird.

13. Magnetisch-induktives Durchflussmessgerät (2) nach einem der Ansprüche 8 bis 12, **dadurch gekennzeichnet, dass** das magnetisch-induktive Durchflussmessgerät (2) so ausgestaltet ist, dass es die Verfahrensschritte gemäß zumindest einem der Ansprüche 1 bis 7 im Betrieb ausführt.

## Claims

1. Method (1) for operating a magnetic-inductive flowmeter (2) with a measuring tube (3) for guiding a medium, with a magnetic field generator (4) for generating a magnetic field passing through the measuring tube (3) perpendicular to the direction of flow of the medium, with a pair of electrodes (5) for tapping an electrical voltage induced in the medium in the measuring tube (3) as a noisy raw measurement signal (6), wherein the noisy raw measurement signal (6) with a first signal path (7) is detected by a signal sensor (8) with high impedance by the pair of electrodes (5) and is passed on as a detected, noisy raw measurement signal (9) by the signal sensor (8) to a first signal processing device (10) and is processed by the signal processing device (10) at least into a noise-removed flow measurement signal (11) and the noise-removed flow measurement signal (11) is output via a working signal interface (12),
wherein the detected, noisy raw measurement signal (9, 9') of the first signal path (7) is detected with a second signal path (13) and is transmitted at least indirectly to the first signal processing device (10) and/or a second signal processing device (14),
**characterized in**
**that** the first signal processing device (10) and/or the second signal processing device (14) carries out a frequency analysis (15) of the detected, noisy raw measurement signal (9, 9'),
**that** the magnetic field generated by the magnetic field generating device (4) is periodically reversed and the first signal processing device (10) and/or the second signal processing device (14) use only those transmitted noisy raw measurement signals (9, 9') for the frequency analysis which originate from a time window (21), in which the magnetic field is constant, and that a plurality of frequency analyses (15) with transmitted noisy raw measurement signals (9, 9') from a plurality of time windows (21) of constant magnetic field are calculated by the first signal processing device (14) and the frequency-dependent result values of the frequency analyses (15) are averaged to form an averaged frequency analysis.

2. Method (1) according to claim 1, **characterized in that** the signal sensor (8) of the first signal path (7) digitizes the noisy raw measurement signal (6) with an analog/digital converter (16) and passes it on as a digitized, detected, noisy raw measurement signal (9), and wherein the second signal path (13) detects the digitized, detected, noisy raw measurement signal (9) of the first signal path (7) and transmits it to the first signal processing device (10) and/or the second signal processing device (14).

3. Method (1) according to claim 1, **characterized in that** the signal sensor (8) of the first signal path (7) taps the noisy raw measurement signal (6) from the electrodes (5) with a high impedance with a transformer stage (17) and passes the noisy raw measurement signal (9') tapped with a high impedance on with a low impedance, and wherein the second signal path (13) detects the detected, noisy raw measurement signal (9') of the first signal path which is passed on with low impedance and transmits it to the first signal processing device (10) and/or the second signal processing device (14), in particular wherein the detected, noisy raw measurement signal (9') transmitted to the first signal processing device (10) and/or the second signal processing device (14) is digitized in the second signal path (13) by the analog/digital converter (18) and the digitized, detected, noisy raw measurement signal (19) is transmitted to the first signal processing device (10) and/or the second signal processing device (14).

4. Method (1) according to any one of claims 1 to 3, **characterized in that** the noisy raw measurement signal (9, 9') detected by the second measurement signal path (13) is transmitted at least indirectly via a further signal interface (20) of the magnetic-inductive flowmeter (2), which is different from the working signal interface (12), to the second signal processing device (14) external to the magnetic-inductive flowmeter (2).

5. Method (1) according to any one of claims 1 to 4, **characterized in that** the noisy raw measurement signal (9, 9') detected by the second measurement signal path (13) is transmitted to the first signal processing device (10) and/or the second signal processing device (14) within the magnetic-inductive flowmeter (2).

6. Method (1) according to any one of claims 1 to 5, **characterized in that** the frequency analyses (15) are averaged from at least 10 time windows (21), preferably frequency analyses (15) are averaged from at least 100 time windows (21).

7. Method according to any one of claims 1 to 6, **characterized in that** a fast Fourier transform is performed as frequency analysis (15) on the basis of the detected, noisy raw measurement signals (9, 9'), in particular wherein the number of noisy raw measurement signals is increased to the next higher power of two by zero padding, in particular if the number of noisy raw measurement values of a time window (21) available for the frequency analysis (15) does not correspond to a power of two.

8. Magnetic-inductive flowmeter (2) with a measuring tube (3) for guiding a medium, with a magnetic field generator (4) for generating a magnetic field passing through the measuring tube (3) perpendicular to the direction of flow of the medium, with a pair of electrodes (5) for tapping an electrical voltage induced in the medium in the measuring tube (3) as a noisy raw measurement signal (6), wherein the noisy raw measurement signal (6) with a first signal path (7) is detected by a signal sensor (8) with high impedance by the pair of electrodes (5) and is passed on as a detected, noisy raw measurement signal (9) from the signal sensor (8) to a first signal processing device (10) and is processed by the first signal processing device (10) at least into a noise-removed flow measurement signal (11) and the noise-removed flow measurement signal (11) is output via a working signal interface (12),
wherein a second signal path (13) is implemented and the detected, noisy raw measurement signal (9, 9') of the first signal path (7) is detected with the second signal path (3) and is transmitted at least indirectly to the first signal processing device (10) and/or a second signal processing device (14), **characterized in**
**that** the first signal processing device (10) and/or the second signal processing device (14) carries out a frequency analysis (15) of the detected, noisy raw measurement signal (9, 9'), wherein the second signal path (13) and the circuit elements in the second signal path (13) are implemented independently of the first signal path (7) and the circuit elements of the first signal path (7) in terms of circuitry.

9. Magnetic-inductive flowmeter (2) according to claim 8, **characterized in that** the signal sensor (8) of the first signal path (7) digitizes the noisy raw measurement signal (6) with an analog/digital converter (16) and passes it on as a digitized, detected, noisy raw measurement signal (9), and wherein the second signal path (13) detects the digitized, detected noisy raw measurement signal (9) of the first signal path (7) and transmits it to the first signal processing device (10) and/or the second signal processing device (14).

10. Magnetic-inductive flowmeter (2) according to claim 8, **characterized in that** the signal sensor (8) of the first signal path (7) taps the noisy raw measurement signal (6) from the electrodes (5) with a high impedance by means of a transformer stage (17) and passes the noisy raw measurement signal (9') tapped with a high impedance on with a low impedance, and the second signal path (13) detects the detected, noisy raw measurement signal (9') of the first signal path (7), which is passed on with low impedance, and transmits it to the first signal processing device (10) and/or the second signal processing device (14), in particular wherein the detected, noisy raw measurement signal (9') transmitted to the first signal processing device (10) and/or the second signal processing device (14) is digitized in the second signal path (13) by an analog/digital converter (18) and the digitized, detected, noisy raw measurement signal (19) is transmitted to the first signal processing device (10) and/or the second signal processing device (14).

11. Magnetic-inductive flowmeter (2) according to any one of claims 8 to 10, **characterized in that** the detected, noisy raw measurement signal (9, 9')) is transmitted via a further signal interface (20) of the magnetic-inductive flowmeter (2), which is different from the working signal interface (12), to the second signal processing device (14) external to the magnetic-inductive flowmeter (2).

12. Magnetic-inductive flowmeter (2) according to any one of claims 8 to 11, **characterized in that** the detected, noisy raw measurement signal (9, 9') is transmitted to the first signal processing device (10) and/or the second signal processing device (14) within the magnetic-inductive flowmeter (2).

13. Magnetic-inductive flowmeter (2) according to any one of claims 8 to 12, **characterized in that** the magnetic-inductive flowmeter (2) is designed such that it carries out the method steps according to at least one of claims 1 to 7 during operation.

## Revendications

1. Procédé (1) permettant de faire fonctionner un débitmètre à induction magnétique (2), comprenant un tube de mesure (3) pour transporter un milieu, un dispositif de génération de champ magnétique (4) pour générer un champ magnétique traversant le tube de mesure (3) perpendiculairement à la direction d'écoulement du milieu, une paire d'électrodes (5) pour prélever une tension électrique induite dans le milieu dans le tube de mesure (3) sous la forme d'un signal de mesure brut bruité (6), dans lequel le signal de mesure brut bruité (6) avec un premier chemin de signal (7) est enregistré à haute impédance par un dispositif d'enregistrement de signal (8) à partir de la paire d'électrodes (5), et est retransmis sous la forme d'un signal de mesure brut bruité (9) enregistré du dispositif d'enregistrement de signal (8) à un premier dispositif de traitement de signal (10), et est traité par le dispositif de traitement de signal (10) au moins en un signal de mesure de débit débruité (11), et le signal de mesure de débit débruité (11) est sorti par l'intermédiaire d'une interface de signal utile (12), dans lequel le signal de mesure brut bruité (9, 9') enregistré du premier chemin de signal (7) est enregistré avec un deuxième chemin de signal (13) et est au moins indirectement transmis au premier dispositif de traitement de signal (10) et/ou à un deuxième dispositif de traitement de signal (14),
**caractérisé en ce que** le premier dispositif de traitement de signal (10) et/ou le deuxième dispositif de traitement de signal (14) effectue(nt) une analyse de fréquence (15) du signal de mesure brut bruité (9, 9') enregistré,
**en ce que** le champ magnétique généré par le dispositif de génération de champ magnétique (4) est inversé périodiquement et le premier dispositif de traitement de signal (10) et/ou le deuxième dispositif de traitement de signal (14) n'utilise(nt) que ceux des signaux de mesure bruts bruités (9, 9') transmis pour l'analyse de fréquence qui proviennent d'une fenêtre temporelle (21) dans laquelle le champ magnétique est constant, et
**en ce que** plusieurs analyses de fréquence (15) avec des signaux de mesure bruts bruités (9, 9') transmis provenant de plusieurs fenêtres temporelles (21) à champ magnétique constant sont calculées par le premier dispositif de traitement de signal (10) et/ou par le deuxième dispositif de traitement de signal (14) et les valeurs de résultat en fonction de la fréquence des analyses de fréquence (15) sont moyennées en une analyse de fréquence moyenne.

2. Procédé (1) selon la revendication 1, **caractérisé en ce que** le dispositif d'enregistrement de signal (8) du premier chemin de signal (7) numérise le signal de mesure brut bruité (6) à l'aide d'un convertisseur analogique/numérique (16) et le retransmet sous la forme d'un signal de mesure brut bruité (9) enregistré numérisé, et dans lequel le deuxième chemin de signal (13) enregistre le signal de mesure brut bruité (9) enregistré numérisé du premier chemin de signal (7) et le transmet au premier dispositif de traitement de signal (10) et/ou au deuxième dispositif de traitement de signal (14).

3. Procédé (1) selon la revendication 1, **caractérisé en ce que** le dispositif d'enregistrement de signal (8) du premier chemin de signal (7) prélève à haute impédance le signal de mesure brut bruité (6) des électrodes (5) avec un étage de transformateur (17), et retransmet à basse impédance le signal de mesure brut bruité (9') prélevé à haute impédance, et dans lequel le deuxième chemin de signal (13) enregistre le signal de mesure bruit bruité (9') enregistré, retransmis à basse impédance, du premier chemin de signal et le transmet au premier dispositif de traitement de signal (10) et/ou au deuxième dispositif de traitement de signal (14), en particulier dans lequel le signal de mesure brut bruité (9') enregistré, transmis au premier dispositif de traitement de signal (10) et/ou au deuxième dispositif de traitement de signal (14), est numérisé sur le deuxième chemin de signal (13) à l'aide du convertisseur analogique/numérique (18) et le signal de mesure brut bruité (19) enregistré numérisé est transmis au premier dispositif de traitement de signal (10) et/ou au deuxième dispositif de traitement de signal (14).

4. Procédé (1) selon l'une quelconque des revendications 1 à 3, **caractérisé en ce que** le signal de mesure brut bruité (9, 9') enregistré par le deuxième chemin de signal de mesure (13) est transmis au moins indirectement par une interface de signal supplémentaire (20), différente de l'interface de signal utile (12), du débitmètre à induction magnétique (2) au deuxième dispositif de traitement de signal (14) à l'extérieur du débitmètre à induction magnétique (2).

5. Procédé (1) selon l'une quelconque des revendications 1 à 4, **caractérisé en ce que** le signal de mesure brut bruité (9, 9') enregistré par le deuxième chemin de signal de mesure (13) est transmis au premier dispositif de traitement de signal (10) et/ou au deuxième dispositif de traitement de signal (14) à l'intérieur du débitmètre à induction magnétique (2) .

6. Procédé (1) selon les revendications 1 à 5, **caractérisé en ce que** les analyses de fréquence (15) sont moyennées à partir d'au moins 10 fenêtres temporelles (21), les analyses de fréquence (15) étant de préférence moyennées à partir d'au moins 100 fenêtres temporelles (21).

7. Procédé selon l'une quelconque des revendications 1 à 6, **caractérisé en ce qu'**une transformation de Fourier rapide est effectuée en tant qu'analyse de fréquence (15) sur la base des signaux de mesure brut bruités (9, 9') enregistrés, en particulier dans lequel le nombre des signaux de mesure bruts bruités est augmenté par remplissage de zéros à la puissance de deux supérieure la plus proche, en particulier lorsque le nombre des valeurs de mesure brutes bruitées disponibles pour l'analyse de fréquence (15) d'une fenêtre temporelle (21) ne correspond pas à une puissance de deux.

8. Débitmètre à induction magnétique (2), comprenant un tube de mesure (3) pour transporter un milieu, un dispositif de génération de champ magnétique (4) pour générer un champ magnétique traversant le tube de mesure (3) perpendiculairement à la direction d'écoulement du milieu, une paire d'électrodes (5) pour prélever une tension électrique induite dans le milieu dans le tube de mesure (3) sous la forme d'un signal de mesure brut bruité (6), dans lequel le signal de mesure brut bruité (6) avec un premier chemin de signal (7) est enregistré à haute impédance par un dispositif d'enregistrement de signal (8) à partir de la paire d'électrodes (5), et est retransmis sous la forme d'un signal de mesure brut bruité (9) enregistré du dispositif d'enregistrement de signal (8) à un premier dispositif de traitement de signal (10), et est traité par le dispositif de traitement de signal (10) au moins en un signal de mesure de débit débruité (11), et le signal de mesure de débit débruité (11) est sorti par l'intermédiaire d'une interface de signal utile (12), dans lequel un deuxième chemin de signal (13) est réalisé, et le deuxième chemin de signal (3) enregistre le signal de mesure brut bruité (9, 9') enregistré du premier chemin de signal (7) et le transmet au moins indirectement au premier dispositif de traitement de signal (10) et/ou à un deuxième dispositif de traitement de signal (14),
**caractérisé en ce que** le premier dispositif de traitement de signal (10) et/ou le deuxième dispositif de traitement de signal (14) effectue(nt) une analyse de fréquence (15) du signal de mesure brut bruité (9, 9') enregistré, dans lequel le deuxième chemin de signal (13) et les éléments de technique de commutation sur le deuxième chemin de signal (13) sont réalisés de manière indépendante en matière de technique de commutation du premier chemin de signal (7) et des éléments de technique de commutation du premier chemin de signal (7).

9. Débitmètre à induction magnétique (2) selon la revendication 8, **caractérisé en ce que** le dispositif d'enregistrement de signal (8) du premier chemin de signal (7) numérise le signal de mesure brut bruité (6) à l'aide d'un convertisseur analogique/numérique (16) et le retransmet sous forme de signal de mesure brut bruité (9) enregistré numérisé, et dans lequel le deuxième chemin de signal (13) enregistre le signal de mesure brut bruité (9) enregistré numérisé du premier chemin de signal (7) et le transmet au premier dispositif de traitement de signal (10) et/ou au deuxième dispositif de traitement de signal (14).

10. Débitmètre à induction magnétique (2) selon la revendication 8, **caractérisé en ce que** le dispositif d'enregistrement de signal (8) du premier chemin de signal (7) prélève à haute impédance le signal de mesure brut bruité (6) à partir des électrodes (5) à l'aide d'un étage de transformateur (17) et retransmet à basse impédance le signal de mesure brut bruité (9') prélevé à haute impédance, et dans lequel le deuxième chemin de signal (13) enregistre le signal de mesure brut bruité (9') enregistré, retransmis à basse impédance, du premier chemin de signal (7) et le transmet au premier dispositif de traitement de signal (10) et/ou au deuxième dispositif de traitement de signal (14), en particulier dans lequel le signal de mesure brut bruité (9') enregistré, transmis au premier dispositif de traitement de signal (10) et/ou au deuxième dispositif de traitement de signal (14), est numérisé dans le deuxième chemin de signal (13) à l'aide d'un convertisseur analogique/numérique (18), et le signal de mesure brut bruité (19) enregistré numérisé est transmis au premier dispositif de traitement de signal (10) et/ou au deuxième dispositif de traitement de signal (14).

11. Débitmètre à induction magnétique (2) selon l'une quelconque des revendications 8 à 10, **caractérisé en ce que** le signal de mesure brut bruité (9, 9') enregistré est transmis par l'intermédiaire d'une interface de signal supplémentaire (20), différente de l'interface de signal utile (12), du débitmètre à induction magnétique (2) au deuxième dispositif de traitement de signal (14) à l'extérieur du débitmètre à induction magnétique (2).

12. Débitmètre à induction magnétique (2) selon l'une quelconque des revendications 8 à 11, **caractérisé en ce que** le signal de mesure brut bruité (9, 9') enregistré est transmis au premier dispositif de traitement de signal (10) et/ou au deuxième dispositif de traitement de signal (14) à l'intérieur du débitmètre à induction magnétique (2).

13. Débitmètre à induction magnétique (2) selon l'une quelconque des revendications 8 à 12, **caractérisé en ce que** le débitmètre à induction magnétique (2) est configuré de telle sorte qu'il exécute en cours de fonctionnement les étapes de procédé selon au moins l'une des revendications 1 à 7.
